Europäisches Patentamt

European Patent Office

Office européen des brevets

(19)

(11) Publication number: **0 083 991**
A2

(12)
# EUROPEAN PATENT APPLICATION

(21) Application number: **83300121.7**

(22) Date of filing: **11.01.83**

(51) Int. Cl.³: **B 41 M 5/24**
**G 11 B 7/00**

(30) Priority: **13.01.82 JP 3837/82**

(43) Date of publication of application:
**20.07.83 Bulletin 83/29**

(84) Designated Contracting States:
**DE FR GB NL**

(71) Applicant: **FUJITSU LIMITED**
**1015, Kamikodanaka Nakahara-ku**
**Kawasaki-shi Kanagawa 211(JP)**

(72) Inventor: **Goto, Yasuyuki**
**2958 Norborito Tama-ku**
**Kawasaki-shi Kanagawa 214(JP)**

(72) Inventor: **Koshino, Nagaaki**
**31-2-404, Hirakata-cho Kanazawa-ku**
**Yokohama-shi Kanagawa 236(JP)**

(72) Inventor: **Goto, Hironori**
**Shibuya-so 101 1194 Mita**
**Atsugi-shi Kanagawa 243(JP)**

(72) Inventor: **Ogawa, Koichi Nichimo Hiyoshi Dai-3**
**Kouporasu 102 1703-2, Hiyoshihoncho**
**Yokohama-shi Kanagawa 223(JP)**

(72) Inventor: **Ogawa, Seiyo**
**216-54, Oba-cho Midori-ku**
**Yokohama-shi Kanagawa 227(JP)**

(74) Representative: **Lawrence, Peter Robin**
**Broughton et al,**
**GILL JENNINGS & EVERY 53-64 Chancery Lane**
**London WC2A 1HN(GB)**

(54) Optical type information recording medium.

(57) An optical type information recording medium suitable for writing and reading information by irradiating a photobeam on a recording material layer formed on a substrate. This recording medium comprises a protective coating layer essentially composed of a porphyrin type compound such as copper phthalocyanine and formed on at least the surface of the recording material layer opposite to the substrate.

This recording medium has an satisfactory water vapour resistance which does not substantially impair the recording sensitivity.

EP 0 083 991 A2

60/2115/02          1    FUJITSU LIMITED

OPTICAL TYPE INFORMATION RECORDING MEDIUM

The present invention relates to an optical type recording medium. More specifically, it relates to an optical type recording medium suitable for use in an optical disc having improved water-vapor resistance which does not impair the recording sensitivity of a recording material layer.

The recent remarkable increase in the amount of information to be treated in information treating systems has led to a demand in the image treating and office automation fields for commercialisation of information recording devices having a large recording capacity and a short access time.

Under these circumstances, recent rapid progress in optical techniques has led to the development and use of optical discs capable of recording information at a large recording capacity or high recording density.

In the art, information is recorded in a recording layer composed of a low melting point metal formed on the surface of a substrate by irradiating a strong photobeam on the recording layer to open information holes (i.e. pits) as a result of the melting of the metal by the heat caused by the photobeam. The recorded information is read out (or detected), based on the presence or absence of pits in the recording layer, by irradiating a weak photobeam on the recording layer. The reading can be effected by detecting the difference in the amount of the light reflected by the irradiated photobeam from the pit portions and the non-pit portions. The photobeams striking the non-pit portions are reflected at a relatively high reflectance due to the metallic luster of the metallic layer, whereas the photobeams striking the pit portions pass through the pit portions at a relatively high transmittance.

The above-mentioned optical devices have a high recording capacity, i.e., about one hundred times of that of commercially available magnetic discs, and are also optimum for use in the image treating and office automation fields from the viewpoint of the cost.

The known recording media for use in optical discs comprise, for example, a thin film of a recording material such as bismuth (Bi) or tellurium (Te) formed as a recording material layer on the surface of a substrate by, for example, a standard vapor deposition technique. The recording materials should be heat meltable and should desirably have good chemical and physical stability and good water-vapor resistance.

Water-vapor resistance is a very important property of recording materials from the viewpoint of the improvement in the reliability of the recording medium. For instance, in the case of a tellurium recording material, the recording material per se will oxidize in the presence of water vapor to form a light (or radiation) transmissible oxide. This prevents the reading of the recorded information since the transparent non-pit portions then allow the reading photobeams to pass therethrough as the pit portions. Even if the water-vapor-induced oxidation does not make the recording material transparent, it will decrease the light reflectance of the reading photobeams at the non-pit portions and, therefore, a signal-to-noise (S/N) ratio is decreased (i.e., a high quality reading of the recorded information cannot be accomplished) since the difference in the amount of the reflected light between the pit portions and the oxidized (or partially oxidized) non-pit portions becomes small.

Various proposals have been made to solve the above-mentioned disadvantage. One proposal calls for the use of noble matals such as gold and rhodium, or their alloys, which are not affected by the presence of water vapor, as a rcording material. Such use of the noble metals has disadvantages, however, in that not only are noble metals expensive, but they also obstruct the flow of the melted recording material due to the high melting point, thus making formation of the pits by irradiation difficult, i.e. impairing the recorded sensitivity. Another proposal calls for the use of inorganic materials such as silicon oxide and a alumina or polymer materials such as poly(vinylidene chloride) and fluorine resins as a protective coating layer for the recording material layer composed of, for example, Te or Bi. However, the use of, for example, silicon oxide or alumina as a protective coating layer prevents the formation of pits due to the high melting point, thereby largely decreasing the recording sensitivity and, also, results in the generation of undesirable cracks in the coating layer due to the heat caused during the recording of information onto the recording material layer. Such cracks in the protective coating layer of course decrease the effectiveness of the protective coating layer. Contrary to this, the use of the polymer materials is disadvantageous due to increased production cost, since the polymer material layer cannot be formed by a vapour deposition technique as used in the formation of the recording layer. Furthermore, polymer materials suffer from carbonation due to the heat caused during the recording of information, thereby preventing formation of pits having smooth and regular profiles.

An optical type information recording medium according to the invention is suitable for writing information by irradiating a photobeam on a recording material layer to cause a physical change in the recording material layer and comprises a substrate, the recording material layer formed on the substrate and a protective coating layer formed on at least the surface of the recording material layer opposite to the substrate and is characterised in that the protective coating layer is formed of a porphyrin type compound.

By using a porphyrin type compound as the protective coating layer it is possible to provide a coating that imparts improved water-vapour resistance

4

and which does not impair the recording sensitivity. Another advantage is that it is possible to form this protective coating layer in the same process as that in which the recording material layer is formed.

The amount of porphyrin type compound must be sufficient to impart the desired protective properties. The thickness of the coating is generally at least 5 nm. The coating is generally formed substantially only of the porphyrin type compound.

The porphyrin type compound is a compound having the characteristic cyclic structure of porphine and includes the compounds in which the methine bridges of porphine are replaced by nitrogen. Thus the compounds include tetrabenztetrazaporphines, such as various metal phthalocyanines, and these are preferred for use in the invention.

The invention is now described with reference to the accompanying drawings in which:-

Figure 1 is a schematic sectional view of the structure of the first embodiment of the optical type information recording medium of the present invention;

Figure 2 is a schematic sectional view of the structure of the second embodiment of the optical type information recording medium of the present invention;

Figure 3 is a partially cut-away schematic perspective view of the structure of an optical disc including the optical type information recording media of the present invention;

Figure 4 is the chemical structure of copper phthalocianine desirably usable as a protective coating material in the present invention;

Figure 5 is a graph illustrating the changes in the transmittance ratios of the recording medium of the present invention and a conventional recording medium with the lapse of time; and

5

Figure 6 is a graph illustrating the changes in the signal to noise ratios (S/N) of the present recording medium and a conventional recording medium.

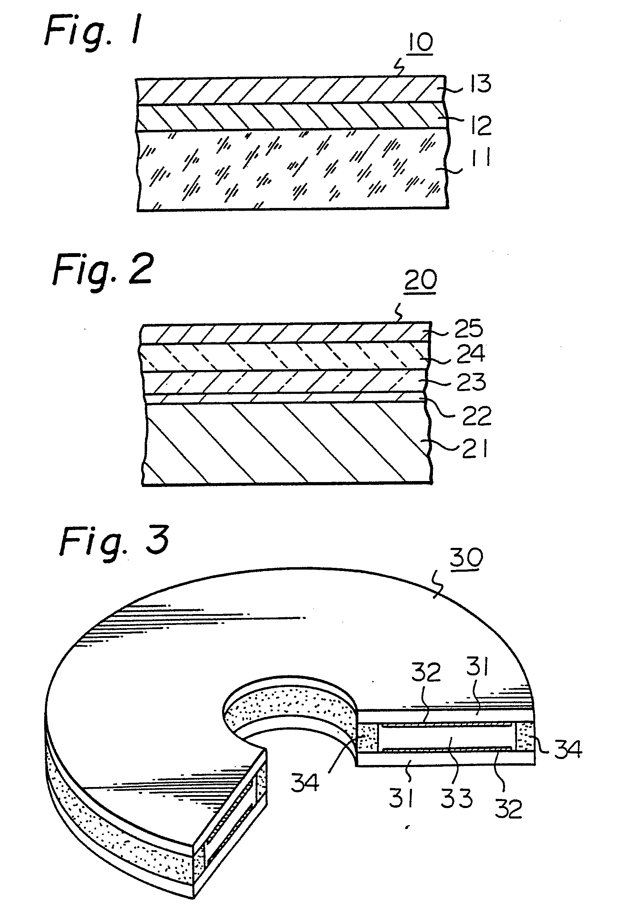

As illustrated in Figure 1, an optical type information recording medium 10 according to a first preferred embodiment of the present invention comprises a radiation (or light) transmissible substrate 11, a recording material layer 12, and a protective coating layer 13.

As illustrated in Figure 2, an optical type information recording medium 20 according to a second preferred embodiment of the present invention comprises a radiation transmissible substrate 21, a radiation transmissible subbing layer 22, a sublimable organic substance layer 23, a
recording material layer 24 and a protective coating ·
layer 25.

These optical type information recording media can be
assembled as a so-called air sandwich type optical disc 30
as shown in Fig. 3. The optical disc 30 comprises radiation
transmissible substrates 31, recording layers 32, and
spacers 34, and protective coating layers (not shown).
Reference numeral 33 represents an air layer enclosed by the
substrates 31 and spacers 34.

The radiation transmissible (or transparent) substrates 21 can be formed by any radiation transmissible
synthetic resin, such as poly(methyl methacrylate), polycarbonate, poly(vinyl chloride), and polystyrene as well as
glass. The use of synthetic resin is advantageous over
glass due to synthetic resin's smaller thermal conductivity
and, therefore, higher recording sensitivity.

The radiation transmissible (or transparent) subbing
layer 22 can be composed of any radiation transmissible
inorganic materials having a melting point higher than that
of the material of the recording layer 23. Typical examples
of such inorganic materials are $SiO_2$ , $MgF_2$ , and $Al_2O_3$.
The radiation transmissible subbing layer 22 can be readily
formed on the surface of the substrate 21 by any known vapor
deposition technique. Although there is no limitation on
the thickness of the subbing layer 22, the thickness is
generally 3 nm or more, desirably 5 to 15 nm. The use of
the subbing layer 22 in the recording media 20 results in a
high signal-to-noise ratio in the reproduction signal. This
is disclosed in detail in our Japanese Patent Application
No. 56-207862 filed on December 22, 1981. This subbing
layer also act as a protective layer for the recording
material layer from the side of the substrate.

The sublimable organic substance layer 23 can be composed of any sublimable organic substance having a sublimation point not far from the melting point of the material
forming the recording  material layer 24. Typical examples of such organic substances are copper phthalocianine, having a sublimation point of 420°C to 430°C, fluorescein, having a sublimation point of 314°C to 316°C, and lead phthalocianine, having a sublimation point of 450°C to 500°C. The sublimable organic substance layer 23 can be readily. formed on the subbing layer 22 by any known vapor deposition technique. Although there is no limitation on the thickness of the organic substance layer 23, the thickness is generally 5 nm or more, desirably 10 to 100 nm. The use of the organic layer 23 assists the smooth melting and hole-opening of the recording material layer 24 when information is written in the recording layer by irradiating a photobeam on the recording layer. This is also disclosed in detail in the above-mentioned Japanese Patent Application. Although not shown in Fig. 2, according to a further embodiment of the present invention, a metal layer composed of, for example, Te, Bi, In, Se, As, Pb, or Sn, or alloys obtained therefrom, can be placed between the subbing layer 22 and the sublimable organic substance layer 23 as disclosed in the above-mentioned Japanese Patent Application. Use of the metal layer improves the photosensitivity of the recording medium when information is recorded and also results in a better S/N ratio when the recorded information is reproduced.

The recording material layers 12 and 24 can be composed of any conventional recording materials such as metals having a relatively low melting point (e.g., about 1000°C or less) and a relatively low thermal conductivity (e.g., 0.1 cal·sec·cm·deg or less). Typical examples of such metals are Te (m.p. 450°C), Bi (m.p. 271°C), In (m.p. 157°C), Se (m.p. 221°C), As (m.p. 612°C), Pb (m.p. 327°C), and Sn (m.p. 232°C). Any alloys obtained therefrom and any mixture thereof can also be used. The recording material layers 12 and 24 can be readily formed on the substrate 11 and the organic substance layer 23, respectively, by any known vapor deposition technique. Although there is no limitation on the thickness of the recording material layers 12 and 24, the thickness is generally 5 nm or more, desirably 10 to 100 nm. Use of a recording material layer 12 and 24 having too large a thickness necessitates a large amount of light energy for melting the metal to open pits.

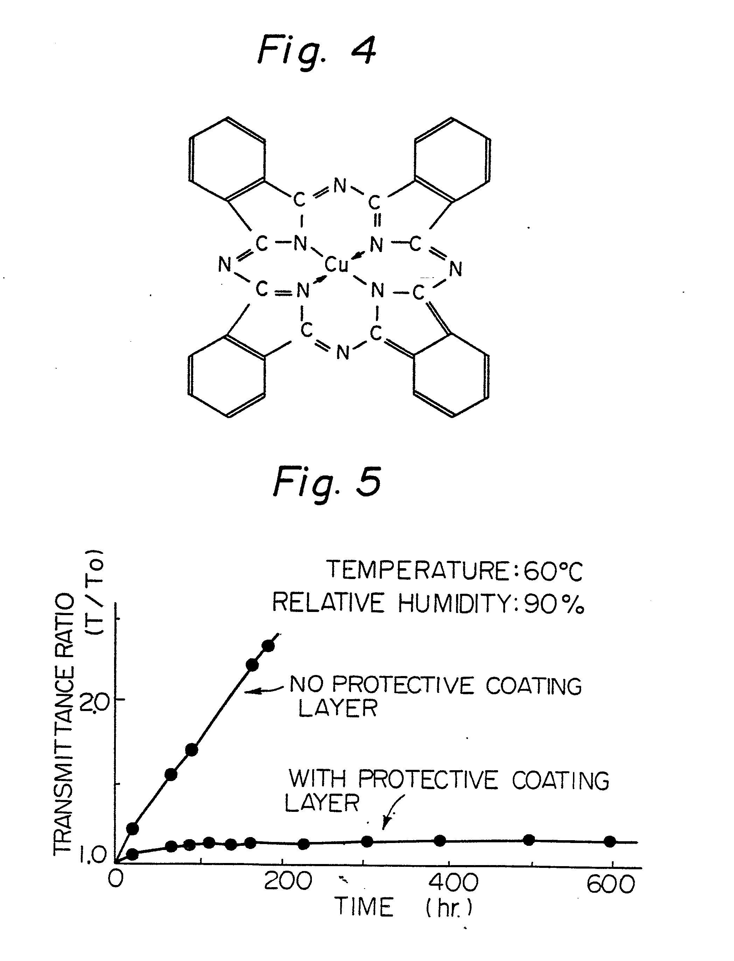

According to the present invention, the protective coating layers 13 and 25, essentially composed of a porphyrin type compound are formed or laminated on the recording material layers 12 and 24 to protect the recording media 10 and 20 from water vapor. Typical examples of such porphyrin type compounds usable in the present invention are copper phthalocianine having the chemical formula as illustrated in Fig. 4, lead phthalocianine, cobalt phthalocianine, iron phthalocianine, vanadium phthalocianine, or any mixture thereof. The protective coating layers 12 and 24 can be readily formed on the recording material layers 12 and 24, respectively, by any known vapor deposition technique. Although there is no limitation on the thickness of the protective coating layers 12 and 24, the thickness is generally 5 nm or more, desirably 10 to 100 nm. Use of a protective coating layer having too large a thickness tends to decrease the recording sensitivity of the information recording medium. Contrary to this, use of a protective coating layer having too small a thickness does not achieve the desired purpose. The protective coating layer can also be formed, for example, between the substrate 11 and the recording material layer 12 or on any position between the substrate 21 and the recording material layer 24, in addition to the protective coating layers 13 and 25.

According to the present invention, as shown in the examples set forth below, use of a porphyrin type compound as a protective layer on the recording material layer formed on the substrate prevents oxidation of the information recording material due to presence of water vapor without causing any substantial decrease in the sensitivity of the information recording material. Furthermore, the protective coating layer can be formed in the same process for producing the recording material layer.

EXAMPLES

The present invention will now be further illustrated by, but is by no means limited to, the following examples.

Example 1 and Comparative Examples 1 and 2

A glass substrate having a diameter of 300 mm and having a thickness of 1.0 mm was placed, after washing, in a bell-jar.

Then, Te having a melting point of 450°C in a boat located in the bell-jar was heated under a pressure of $10^{-6}$ Torr, while the deposited substrate was turned at a speed of 1 to 2 rpm, to deposit a Te layer having a thickness of 30 nm on the surface of the substrate.

Thereafter, copper phthalocianine having a melting point of 430°C in a boat located in the bell-jar was heated under a pressure of $10^{-6}$ Torr, while the deposited substrate was turned at a speed of 1 to 2 rpm, to deposit a copper phthalicianine coating layer having a thickness of 30 nm on the Te layer.

As Comparative Example 1, a Te layer having a thickness of 30 nm was deposited on the surface of a glass substrate used above in the same manner as in Example 1.

As Comparative Example 2, a Te layer having a thickness of 30 nm was deposited on the surface of the glass substrate used above in the same manner as in Example 1. Then, a $SiO_2$ layer having a thickness of 30 nm was deposited on the Te layer by heating $SiO_2$ in a boat located in the bell jar under a pressure of $10^{-6}$ Torr, while the deposited substrate was turned at a speed of 1 to 2 rpm.

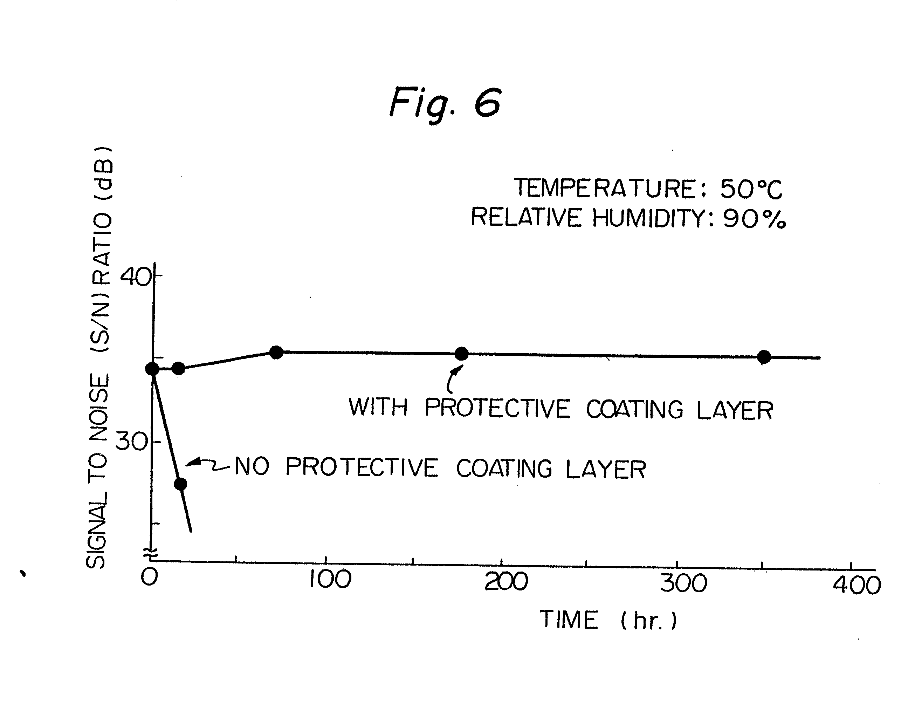

The water vapor resistance of the information recording media thus obtained was determined under the conditions of a temperature of 60°C and a relative humidity of 90% after recording the predetermined information. The results are shown in Table 1 and Figs. 5 and 6.

10

## Table 1

| No. | Rotation speed of optical disc (rpm) | Initial minimum power (mW) | Minimum power after 180 hours test (mW) |
|---|---|---|---|
| Example 1 | 600 | 8.0 | 8.5 |
| Comparative example 1 | 600 | 7.5 | 17 |
| Comparative example 2 | 600 | 18 | 18.5 |

As is clear from the results shown in Table 1, the initial minimum writing power of the laser beam for obtaining the stable reading  S/N ratio of the recording medium of Example 1 was less than that of Comparative Example 1 with no protective coating layer.  However, the minimum power of Comparative Example 1 after a 180 hour humidity test was remarkably increased (i.e., the sensitivity of the recording medium was remarkably decreased).  Contrary to this, the minimum power of the recording medium of Example 1 was increased only from 8.0 mW to 8.5 mW.  This result clearly illustrates the superiority of the water vapor resistance of the present recording medium over the conventional recording medium with no protective coating layer.  On the other hand, the decrease in the minimum power of the recording medium of Comparative Example 2 having a $SiO_2$ protective coating layer was not very large.  However, the minimum power per se of Comparative Example 2 was so high that this recording medium was not suitable for practical use.

Figure 5 shows the changes in the transmittance ratios (i.e., the transmittance T after humidity test/the initial transmittance To) of the recording media of Example 1 (with protective coating layer) and Comparative Example 1 (with no protective coating layer) with the lapse of time.  As is clear from the results of Fig. 5, the transmittance ratio of Example 1 slightly changed between 0 and about 100 hours. Thereafter, no substantial change in the transmittance ratio (T/To) was observed. Contrary to this, the transmittance ratio of the recording medium of Comparative Example 1 with no protective coating layer remarkably increased with the lapse of time. It should be noted that the increase in the transmittance ratio means the progressive oxidation of the Te layer with the lapse of time due to the presence of water vapor. The temperature of 60°C and a relative humidity of 90% are accelerated test conditions. The above-mentioned results of Example 1 the present recording medium can be used for 10 years or more under ordinary conditions.

Figure 6 shows the changes in the signal to noise ratio (S/N) (i.e., the quality) of the recording media of Example 1 (with protective coating layer) and Comparative Example 1 (with no protective coating layer) with the lapse of time. As is clear from the results of Fig. 6, the S/N ratio of the recording medium of Example 1 did not decrease during the 350 hour test under the accelerated humidity test conditions. Contrary to this, the S/N ratio of the recording medium of Comparative Example 1 remarkably decreased after only a 15 hour test.

Example 2 and Comparative Example 3

A poly(methyl methacrytate) substrate having a diameter of 300 mm and having a thickness of 1.2 mm was placed, after washing, in a bell-jar. SiO in a boat located in the bell-jar was heated under a pressure of $10^{-6}$ Torr, while the substrate was turned at a speed of 120 rpm, to deposit a SiO layer having a thickness of 10 nm on the surface of the substrate.

Then, copper phthalocianine in a boat located in the bell-jar was heated under a pressure of $10^{-6}$ Torr, while the deposited substrate was turned at a speed of 120 rpm, to deposit a coper phthalocianine layer having a thickness of 15 nm on the surface of the SiO layer. Thereafter, a Te layer having a thickness of 20 nm was deposited on the copper phthalocianine layer in the same manner as described above.

Finally, a copper phthalocianine protective coating layer having a thickness of 20 nm was deposited on the Te layer.

As Comparative Example 3, an information recording medium was prepared in the same manner as in Example 2, except that no top copper phthalocianine protective coating layer was deposited on the Te layer. .

The results are shown in Table 2.

Table 2

| No. | Rotation speed of optical disc (rpm) | Initial writing minimum power (mW) | Minimum writing power after 180 hours test (mW) |
|---|---|---|---|
| Example 2 | 600 | 5.5 | 6.0 |
| Comparative example 3 | 600 | 4.5 | 10 |

Examples 3 to 6

Recording media were prepared in the same manner as described in Example 2.

The results are shown in Table 3.

13

Table 3

| Example No. | Recording material layer (nm) | Protective coating layer (nm) | Minimum writing power (mw) | |
|---|---|---|---|---|
| | | | Initial | After 180 hours |
| 3 | Te (20) | Pb-Pc (30) | 8.5 | 9.0 |
| 4 | Te (20) | Co-Pc (30) | 8.5 | 9.0 |
| 5 | Bi (20) | Cu-Pc (30) | 11.0 | 11.5 |
| 6 | In (20) | Cu-Pc (30) | 12.0 | 12.0 |

Pb-Pc:  Lead phthalocianine

Co-Pc:  Cobalt phthalocianine

Cu-Pc:  Copper phthalocianine

14

## CLAIMS

1.      An optical type information recording medium
suitable for writing information by irradiating a photobeam on a recording material layer to cause a physical
change in the recording material layer and that comprises a substrate, the recording material layer formed
on the substrate and a protective coating layer formed
on at least the surface of the recording material
layer opposite to the substrate, characterised in that
the protective coating is formed of a porphyrin type
compound.

2.      A recording medium according to claim 1
characterised in that the protective coating consists
substantially only of the porphyrin type compound.

3.      A recording medium according to claim 1 or
claim 2 characterised in that the porphyrin type
compound is a tetrabenztetrazaporphine.

4.      A recording medium according to any preceding
claim characterised in that the porphyrin type compound
is copper phthalocyanine, lead phthalocyanine, cobalt
phthalocyanine, iron phthalocyanine, vanadium phthalocyanine or a mixture thereof.

5.      A recording medium according to any preceding
claim characterised in that the thickness of the
protective coating is at least 5 nm.

6.      A recording medium according to any preceding
claim characterised in that the recording material layer
is composed of Te, Bi, In, Se, As, Pb, Sn or an alloy or mixture of two or more of these.

7.      A recording medium according to any preceding claim characterised in that the recording material is Te and the porphyrin type compound is copper phthalo-cyanine.

*Fig. 1*

10

13
12
11

*Fig. 2*

20

25
24
23
22
21

*Fig. 3*

30

32  31

34

34

31  33  32

## Fig. 4

## Fig. 5

TEMPERATURE: 60°C
RELATIVE HUMIDITY: 90%

NO PROTECTIVE COATING LAYER

WITH PROTECTIVE COATING LAYER

TRANSMITTANCE RATIO (T/To)

2.0

1.0

0    200    400    600

TIME (hr.)

# Fig. 6

TEMPERATURE: 50°C
RELATIVE HUMIDITY: 90%

WITH PROTECTIVE COATING LAYER

NO PROTECTIVE COATING LAYER

SIGNAL TO NOISE (S/N) RATIO (dB)

TIME (hr.)

3/3

0083991